# EUROPÄISCHE PATENTSCHRIFT

(11) **EP 0 923 709 B1**
(45) Veröffentlichungstag und Bekanntmachung des Hinweises auf die Patenterteilung: **07.01.2004**
(21) Anmeldenummer: 97941960.3
(22) Anmeldetag: 23.08.1997
(51) Int. Cl.: G01F 1/05, B67D 5/20

(54) **DURCHFLUSSMESSVORRICHTUNG**
DEVICE FOR MEASURING THE VOLUMETRIC FLOW OF A FLUID
DISPOSITIF POUR MESURER UN DEBIT

(30) Priorität: 02.09.1996 DE 19635435
(43) Veröffentlichungstag der Anmeldung: 23.06.1999
(73) Patentinhaber: Marconi Commerce Systems GmbH & Co.KG, 33154 Salzkotten (DE)
(72) Erfinder: KÖPL, Manfred, D-44805 Bochum (DE); HARDING, Alfons, D-33178 Borchen (DE)
(74) Vertreter: Fitchett, Stuart Paul
(86) Internationale Anmeldenummer: PCT/EP1997/004602
(87) Internationale Veröffentlichungsnummer: WO 1998/010248

(56) Entgegenhaltungen:
- EP-A- 0 011 787
- EP-A- 0 288 448
- WO-A-93/12405
- US-A- 4 581 946
- US-A- 4 885 943
- US-A- 5 016 187
- US-A- 5 574 229

## Beschreibung

Die Erfindung betrifft eine Vorrichtung zum Messen des Volumenstromes einer Flüssigkeit gemäß Gattungsbegriff des Anspruches 1.

Ein derartiges Vorrichtung bzw. eine derartige Vorrichtung ist bekannt aus der WO 93/12 405. Dort ist eine Tankvorrichtung für Kraftfahrzeuge beschrieben, bei der das Volumenmeßwerk aus einem Schraubenspindelzähler besteht. Der Schraubenspindelzähler besteht aus zwei ineinandergreifenden Schneckenkörpern. Einer der beiden Schneckenkörper trägt einen Magneten. Wird der Magnet zur Folge der Drehbewegung der Schneckenkörper gedreht, werden von einem mit dem Magneten zusammenwirkenden Sensorelement pulsartige Meßsignale abgegeben, welche einem Meßwertumformer zugeführt werden, welcher aus diesen Meßsignalen Zählsignale für ein Zählwerk formt. Der im Meßwertumformer integrierte Impulsgeber enthält eine Impulsabgleich- und Impulsformerstufe, durch welche die bei Rotation der Schneckenkörper erzeugten Impulse zu Eichzwecken elektronisch justiert werden können, bevor sie dem elektronischen Zählwerk mit Recheneinheit zugeführt werden. Dabei werden diese Impulse in ihrer Größe oder Folgefrequenz durch externe, von der Recheneinheit des elektronischen Zählwerks abgeleitete Steuer- oder Kontrollimpulse derart verändert, daß sie bspw. auf ein arithmetisches Verhältnis zur Durchflußmenge des getankten Kraftstoffes abgestimmt werden. Diese Steuer- oder Kontrollimpulse sind in der Recheneinheit des elektronischen Zählwerks abhängig von bestimmten betrieblichen oder klimatischen Parametern durch hierzu bestimmtes Personal einstellbar oder bei Bedarf, zu Eichzwecken, nachstellbar.

Bei einem Schraubenspindelzähler oder bei einem Zählwerk, bei dem die Verdrängungskörper aus Zahnrädern bestehen oder auch bei Zählwerken, bei denen ein hin und her bewegbarer Kolben als bewegliches Element Verwendung findet, besteht oftmals bauartbedingt eine Nichtlinearität zwischen den Meßsignalen und dem tatsächlichen Volumenstrom. Bei einem geringen Volumenstrom kann bspw. die einem Puls zugeordnete Flüssigkeitsquantität größer oder kleiner sein, als die Quantität, die einem Puls bei einer höheren Flußrate einem Puls zugeordnet werden kann.

Der Erfindung liegt daher die Aufgabe zugrunde, eine gattungsgemäße Vorrichtung hinsichtlich der Meßgenauigkeit zu verbessern.

Gelöst wird die Aufgabe durch die in den Ansprüchen angegebene Erfindung.

Erfindungsgemäß findet im Meßwertumformer eine Korrektur der Signale statt, wobei der verwandte Korrekturfaktor abhängig ist von der Flußrate des zu messenden Mediums. Hierzu wird die Zyklusfrequenz des beweglichen Elementes, bspw. der Schraubenspindel ermittelt, welche ein Maß für die Flußrate ist. Zu einer Vielzahl von Zyklusfrequenzwerten sind in einer Tabelle oder dergleichen im Meßwertumformer zugehörige Korrekturfaktoren abgespeichert. Mittels des jeweiligen Korrekturfaktors für die jeweilige Zyklusfrequenz formt der Meßwertumformer aus den Meßsignalen Zählsignale, um sie an ein Zählwerk weiterzugeben. Die Meßwertsignale sind vorzugsweise pulsförmig ausgebildet, wobei die Pulse auch Wellenform annehmen können. Aus der Pulsdauer oder aus der Pulsfolgezeit wird vorzugsweise die Zyklusfrequenz ermittelt. In einer bevorzugten Ausgestaltung der Erfindung wird jeder gemessene Puls mittels des Korrekturfaktors mit einem Volumen bewertet. Die Volumenwerte sind dann abhängig von der Durchflußrate. Bspw. kann ein Volumenwert bei einer Durchflußrate von 10 1 pro Minute 8 ml betragen und bei einer Durchflußrate von 1 l pro Minute aus baulichen Gründen 11 ml. Diese Volumenwerte werden vom Meßwertumformer aufsummiert. Der Meßwertumformer gibt dann ein Zählsignal ab, wenn die Summe der aufsummierten Volumenwerte jeweils ein Vielfaches eines Standartvolumenwertes erreicht. Ist bspw. beim vorgenannten Beispiel als Standartvolumenwert 10 ml gewählt, und wird mit einer Flußrate von 1 1 pro Minute getankt, so gibt der Meßwertumformer bereits beim ersten Meßsignal ein Zählsignal ab. Wird dagegen mit einer Flußrate von 10 1 pro Minute getankt, so gibt der Meßwertumformer nach Erfassen des ersten Meßsignals kein Zählsignal ab, weil der Speicher, in welchem die Volumenwerte abgespeichert werden dann erst den Wert 8 enthält. Erst wenn ein zweiter Meßpuls empfangen wird und der Speicher einen Wert annimmt, der den Standartvolumenwert von 10 ml erreicht oder überschreitet, wird ein Zählsignal abgegeben. Es ist auch denkbar, daß der Wert des Summenspeichers nach Abgabe des Zählsignals um den Standartvolumenwert reduziert wird, so daß die Zählsignalabgabe immer dann erfolgt, wenn der Speicher den wert des Standartvolumenwertes erreicht oder überschreitet. Im Speicher wird dann nur noch der jeweilige Restwert behalten. Die Korrekturfaktoren werden vorzugsweise zu einer Vielzahl von Zyklusfrequenzen in einer Tabelle im Meßwertumformer abgelegt. Neben den Korrekturfaktoren kann auch ein Eichfaktor dort abgelegt sein; welcher nach Linearisierung der Signale zu den Zählsignalen, mit letzten wie beim Stand der Technik in Form eines Proportionalitätsfaktor multipliziert wird, damit die tatsächlich durchgeflossene, von betrieblichen oder klimatischen Parametern abhängige Volumenmenge auf der Anzeigeeinrichtung dargestellt werden kann, bzw. von einem Zählwerk aufsummiert werden kann. Korrekturwerte, die zwischen zwei Tabellenwerten liegen, können interpoliert werden. Der Meßwertumformer besitzt vorzugsweise einen Mikroprozessor. Die Korrektur der Meßsignale in Zählsignale erfolgt dann von einem Mikroprogramm gesteuert. In einem Zählwerk können die Zählsignale gezählt werden. Es kann dann die jeweilige Summe oder die jeweilige Flußrate angezeigt werden.

Ein Ausführungsbeispiel der Erfindung wird anhand der beigefügten Funktionsskizze erläutert.

Mit der Bezugsziffer 5 ist eine Kraftstoffleitung in einer Tanksäule bezeichnet, welche von einer Kraftstoffpumpe kommt und welche zu einer Zapfpistole hinführt. In der Kraftstoffleitung 5 sitzt ein Volumenmeßwerk, welches als Schraubenspindelzähler ausgebildet ist, wie er von der WO 93/12 405 beschrieben ist. Der Schraubenspindelzähler gibt wie dort beschrieben Meßsignale in Form von Pulsen ab, welche mit M dargestellt sind. Über eine Verbindungsleitung 7 werden diese Meßsignale M einem Meßwertumformer 2 zugeführt. Der Meßwertumformer 2 besitzt einen Mikroprozessor 3 mit einem Summenspeicher 9 und einem Tabellenspeicher 4.

In dem Tabellenspeicher 4 werden Korrekturfaktoren abgespeichert. Es werden eine Vielzahl von Korrekturfaktoren zu verschiedenen Pulsdauern bzw. Pulsfolgezeiten der Meßsignale M abgespeichert.

Der Mikroprozessor 3 analysiert die vom Meßwerk 1 über die Leitung 7 übertragenen Pulse M auf ihrer Dauer bzw.

Pulsfolgezeit hin und ermittelt so die Drehfrequenz der Schraubenspindel. Anhand dieser Drehfrequenz nimmt der Prozessor 3 dann aus der Tabelle 4 einen Korrekturfaktor und bewertet so jeden empfangenen Puls M anhand seiner Pulsdauer/Pulsfolgezeit mit einem Volumenwert der dem bei der korrespondierenden Spindeldrehung tatsächlich durch das Volumenmeßwerk 1 geflossenen Volumen oder einem dazu proportionalen Wert entspricht. Bspw. wird bei einer Pulslänge von 10 ms der zugeordnete Meßpuls mit einem Volumenwert von 12 ml bewertet und ein Puls mit einer Pulsdauer von nur 1 ms mit bspw. 8 ml. Dies dann, wenn bei geringen Flußraten verhältnismäßig mehr Kraftstoff durch das Meßwerk 1 durchfließt, als bei höheren Flußraten.

Die so ermittelten Volumenwerte der einzelnen Pulse werden in einem Summenspeicher 9 aufsummiert. Erreicht die Summe S ein Vielfaches eines Standartvolumenwertes, bspw. 10 ml, so gibt der Meßwertumformer 2 über eine Leitung 6 einen Zählimpuls Z an eine Anzeige-/Zähleinrichtung 8 weiter. Der Speicher 9 kann entweder immer weiter hochzählen oder aber bei jeder Abgabe eines Zählsignals Z um den Wert des Standartvolumenwertes vermindert werden. Es wird dann immer nur der Restwert eines dem letzten Meßsignal zugeordneten Volumenwert abgespeichert.

Die vorbeschriebene Vorrichtung bzw. das vorbeschriebene Verfahren ist sowohl für flüssige als auch für gasförmige Medien geeignet. Bevorzugtes Anwendungsgebiet ist die Anwendung in Kraftfahrzeugtankzapfsäulen. Die Erfindung geht von der Idee aus, daß bei Meßgeräten gleicher Bauart in Abhängigkeit von der Durchflußgeschwindigkeit des zu messenden Mediums immer der gleiche Fehler auftritt. Das Ziel der Erfindung ist es durch eine im Meßgerät befindliche Elektronik diesen bauartbedingten Fehler zu kompensieren. Der Meßwertumformer ist bevorzugt im Volumenmeßwerkgehäuse eingebracht.
² Translator's note: *sic*

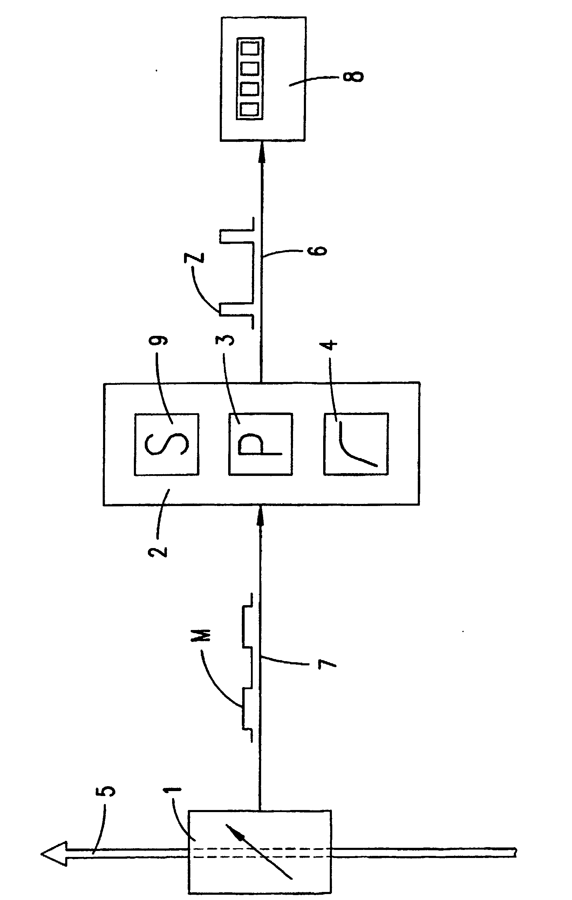

## Patentansprüche

1. Vorrichtung zum Messen des Volumenstromes einer Flüssigkeit mit einem Volumenmeßwerk, welches ein bewegliches Element, bspw. zwei oder mehrere Schraubenspindeln aufweist und welches von der zyklischen Bewegung des Elementes abgeleitete Meßsignale an einen Meßwertumformer abgibt, welcher aus den Meßsignalen ZähZsignale formt, wobei der Meßwertumformer (2) aus den Meßsignalen (M) die Zyklusfrequenz des beweglichen Elementes ermittelt und mittels abgespeicherter Korrekturfaktoren für die jeweilige Zyklusfrequenz zum tatsächlichen Volumenstrom proportionale Zählsignale (Z) formt,
**dadurch gekennzeichnet, daß** jeder gemessene Puls mittels des Korrekturfaktors mit einem Volumenwert bewertet wird, welche Volumenwerte von dem Meßwertumformer aufsummiert werden, welcher ein Zählsignal abgibt, wenn die Summe jeweils den Wert oder ein Vielfaches eines Standartvolumenwertes erreicht.

2. Vorrichtung nach einem der vorhergehenden Ansprüche oder insbesondere danach, **dadurch gekennzeichnet, daß** die Meßsignale pulsförmig sind und die Zyklusfrequenz durch Bestimmen der Pulsdauer oder Pulsfolgezeit der Meßsignale ermittelt wird.

3. Vorrichtung nach einem oder mehreren der vorhergehenden Ansprüche oder insbesondere danach, **dadurch gekennzeichnet, daß** die Korrekturfaktoren zu eine Vielzahl von Zyklusfrequenzen in Form einer Tabelle im Meßwertumformer abgelegt sind.

4. Vorrichtung nach einem oder mehreren der vorhergehenden Ansprüche oder insbesondere danach, **dadurch gekennzeichnet, daß** die Korrekturfaktoren zwischen zwei Tabellenwerten durch Interpolation ermittelt werden .

5. Vorrichtung nach einem oder mehreren der vorhergehenden Ansprüche oder insbesondere danach, **dadurch gekennzeichnet, daß** der Meßwertumformer einen Mikroprozessor umfaßt.

6. Vorrichtung nach einem oder mehreren der vorhergehenden Ansprüche oder insbesondere danach, **dadurch gekennzeichnet, daß** das Volumenmeßwerk (1) ein Schraubspindelzähler oder ein Zahnradzähler oder ein anderer Volumenverdrängungszähler in einer Tanksäule ist.

## Claims

1. Device for measuring the volumetric flow of a fluid using a volume-measuring mechanism, which mechanism comprises a movable element, for example two or more screw-spindles, and outputs to a measurement-value converter measurement signals derived from the cyclical motion of the element, the measurement-value converter forming count signals from the measurement signals, wherein the measurement-value converter (2) determines the cycle frequency of the movable element from the measurement signals (M) and, using stored correction factors for the respective cycle frequency, forms count signals (Z) which are proportional to the actual volumetric flow, **characterized in that** each measured pulse is given a volume value using the correction factor, the volume values being summed by the measurement-value converter, the converter outputting a count signal each time the sum reaches a standard volume value or a multiple thereof.

2. Device according to one of the preceding claims², or especially according thereto, **characterized in that** the measurement signals are pulse-shaped and the cycle frequency is ascertained by determining the pulse duration or pulse repetition period of the measurement signals.

3. Device according to one or more of the preceding claims, or especially according thereto, **characterized in that** the correction factors are stored against a plurality of cycle frequencies in the form of a table in the measurement-value converter.

4. Device according to one or more of the preceding claims, or especially according thereto, **characterized in that** correction factors lying between two table values are determined by interpolation.

5. Device according to one or more of the preceding claims, or especially according thereto, **characterized in that** the measurement-value converter comprises a microprocessor.

6. Device according to one or more of the preceding claims, or especially according thereto, **characterized in that** the volume-measuring mechanism (1) is a screw-spindle counter or a toothed-wheel counter or other volume-displacement counter in a filling column.

## Revendications

1. Dispositif pour mesurer le débit volumique d'un liquide au moyen d'une unité de mesure du volume, laquelle comporte un élément mobile, par exemple deux ou plusieurs broches filetées, et délivre des signaux de mesure dérivés du déplacement cyclique de l'élément à un convertisseur de valeurs de mesure, lequel forme des signaux de comptage à partir des signaux de mesure, dans lequel le convertisseur de valeur de mesure (2) détermine, à partir des signaux de mesure (M), la fréquence des cycles de l'élément mobile et forme des signaux de comptage (Z) proportionnels au débit volumique effectif, au moyen de facteurs de correction mémorisés pour les fréquences respectives des cycles,
**caractérisé en ce que** chaque impulsion mesurée est évaluée au moyen du facteur de correction avec une valeur de volume, les valeurs de volume étant additionnées par le convertisseur de valeurs de mesure qui délivre un signal de comptage lorsque la somme atteint une valeur de volume standard ou un multiple de cette valeur.

2. Dispositif selon la revendication précédente,
**caractérisé en ce que** les signaux de mesure ont une forme impulsionnelle, et **en ce que** la fréquence de cycle est déterminée via la détermination de la durée des impulsions ou bien de l'instant de succession des impulsions des signaux de mesure.

3. Dispositif selon une ou plusieurs des revendications précédentes, **caractérisé en ce que** les facteurs de correction sont mémorisés pour une multitude de fréquences des cycles sous la forme d'un tableau dans le convertisseur de valeurs de mesure.

4. Dispositif selon une ou plusieurs des revendications précédentes, **caractérisé en ce que** les facteurs de correction sont déterminés par interpolation entre deux valeurs du tableau.

5. Dispositif selon une ou plusieurs des revendications précédentes, **caractérisé en ce que** le convertisseur de valeurs de mesure comprend un microprocesseur.

6. Dispositif selon une ou plusieurs des revendications précédentes, **caractérisé en ce que** l'unité de mesure du volume (1) est un compteur à broche filetée ou un compteur à pignons ou un autre compteur de refoulement volumique de pompe à essence.
